# EUROPÄISCHE PATENTSCHRIFT

(11) **EP 1 390 628 B1**
(45) Veröffentlichungstag und Bekanntmachung des Hinweises auf die Patenterteilung: **05.04.2006**
(21) Anmeldenummer: 02742779.8
(22) Anmeldetag: 22.05.2002
(51) Int. Cl.: F16C 11/06

(54) **KUGELGELENK**
BALL JOINT
JOINT ROTULE

(30) Priorität: 22.05.2001 DE 10125143
(43) Veröffentlichungstag der Anmeldung: 25.02.2004
(73) Patentinhaber: ZF Lemförder Metallwaren AG, 49441 Lemförde (DE)
(72) Erfinder: BLANKE, Arnold, 49401 Damme (DE)
(86) Internationale Anmeldenummer: PCT/DE2002/001880
(87) Internationale Veröffentlichungsnummer: WO 2002/095248

(56) Entgegenhaltungen:
- EP-A- 0 589 550
- DE-A- 3 341 878
- DE-C- 4 420 487
- FR-A- 2 378 197
- US-A- 3 801 169
- US-A- 4 076 343

## Beschreibung

Die Erfindung betrifft ein Kugelgelenk, bestehend aus einer Hülse oder einem Zapfen mit einer Teilkugelfläche und einer diese Teilkugelfläche formschlüssig umfassenden Lagerschale mit hohlkugelförmiger Lagerfläche, die in einem zweiteiligen Gehäuse angeordnet ist, dessen Gehäusehälften Rastelemente gegenseitig ineinandergreifende Rastnasen und Rastrillen aufweisen, die in ihrer Montageendlage beide Gehäusehälften in Richtung der Längsachse der Hülse bzw. des Zapfens relativ unbeweglich miteinander verrasten, wobei die Lagerfläche für die Teilkugefläche der Hülse oder des Zapfens in die Innenflächen beider Gehäusehälften integriert ist, siehe DE-A-3 341 878.

Bei einem älteren Vorschlag dieser Art gemäß der DE 100 23 602 A1 ist die Lagerschale als getrenntes Bauteil ausgebildet und zwischen den beiden Gehäusehälften eingespannt. Die Lagerschale ist mindestens zweiteilig ausgebildet und muss zum passgerechten Sitz von der Teilkugelfläche einer Hülse und von der hohlkugelförmigen Lagerfläche entsprechend genau eingepasst und ebenso spielfrei an ihrer Außenfläche in beide Gehäusehälften eingespannt werden. Dies erfordert bei einer Serienproduktion nicht nur eine relativ passgenaue Fertigung, sondern auch mindestens vier Teile, nämlich zwei Gehäusehälften und die beiden Lagerschalen, die exakt auf die Teilkugelfläche der Hülse oder des Zapfens abgestimmt werden müssen.

Ein Familienmitglied zur DE 100 23 602 A1 bildet die EP-A-1 194 702, voröftenlicht unter WO-A-01/88394, die einen Stand der Technik nach Artikel 54(3) und (4) EPÜ beschreibt.

Bei einem Kugelgelenk anderer Art gemäß dem DE 19 84 453 U1 wird auf einem Bolzen zwischen zwei spiegelsymmetrischen Tragstücken ein Ring mit einer Teilkugelfläche eingespannt, auf welcher ein geteilter Außenring mit einer Teilhohlkugelfläche in einer elastischen Büchse eingespannt ist, die zwischen zwei Sprengringen innerhalb einer Öffnung eines Lenkers gehaltert ist. Der Bolzen ist zwischen zwei Flanschen eines Fahrgestells angeordnet und wird an dem vom Schraubenkopf abgewandten Ende über eine Unterlegscheibe, eine Kronenmutter und einen Splint gesichert. Nachteilig ist die Vielzahl der exakt aufeinander abzustimmenden Teile, welche nicht nur eine Serienfertigung, sondern auch die Montage des Kugelgelenkes verkomplizieren.

Der Erfindung liegt die Aufgabe zugrunde, ein Kugelgelenk der eingangs genannten Gattung montage- und fertigungstechnisch zu vereinfachen und einen passgerechten Sitz bei geringen Friktionskräften des Kugelgelenks durch eine kraft oder weggesteuerte Positionierung der beiden Gehäusehälften während ihres Zusammenbaus zu gewährleisten.

Diese Aufgabe wird in Verbindung mit dem eingangs genannten Gattungsbegriff erfindungsgemäß durch die kennzeichnenden Merkmale des Ansprüchs 1 gelöst.

Durch diese Ausbildung wird es möglich, ein kraft- bzw. weggesteuertes Zusammenpressen der beiden Gehäusehälften die Rastelemente während ihres Zusammenbaus mit ihren gegenseitig ineinandergreifenden Rastnasen und Rastrillen so weit zusammenzudrücken, bis der passgerechte Sitz zwischen der Teilkugelfläche der Hülse bzw. des Zapfens einerseits und der hohlkugelformigen Lagerfläche der formschlüssig umgreifenden Lagerschalen andererseits erreicht ist.

Einer vorteilhaften Ausgestaltung der Erfindung zufolge sind die Gehäusehälften an ihrer Außenfläche von einem metallischen Ringelement formschlüssig umgriffen. Dabei dient das die beiden Gehäusehälften umgreifende, vorzugsweise metallische Ringelement auch als Wegbegrenzung beim Zusammendrücken der beiden Gehäusehälften während der Montage. Das Ringelement gehört zu einem ersten Bauteil, welches über das Kugelgelenk mit einem zweiten, mit der Hülse oder dem Zapfen zu verbindenden Bauteil gelenkig gekuppelt ist. Das Ringelement kann anstelle des zuvor erwähnten metallischen Werkstoffes ebenso aus geeigneten anderen Materialien hergestellt sein, wie beispielsweise Kunststoff oder Verbundwerkstoffen aus Metall und Kunststoff.

Nach einer besonders vorteilhaften Weiterbildung der Erfindung ist zwischen den die Lagerflächen beinhaltenden Gehäuse-Innenteilen und den die Anlagefläche für das Ringelement aufweisenden Gehäuse-Außenteilen beider Gehäusehälften ein etwa parallel zur Symmetrielängsachse der Hülse oder des Zapfens verlaufender Spalt vorgesehen. Durch diesen Spalt ist es möglich, dass die die Lagerflächen aufweisenden Gehäuse-Innenteile beim Zusammenpressen federnd nach außen in den Spalt zurückweichen können. Dabei liegen vorteilhaft in verrasteter Montageposition die Gehäuse-Innenteile mit ihren Lagerflächen unter einer gewünschten Federvorspannung an der Teilkugelfläche der Hülse oder des Zapfens an. Über die ringförmig ausgebildeten blattfederartigen zurückweichenden Lagerflächen ist die Federvorspannung über die Rasttiefe der Rastelemente beider Gehäusehälften steuerbar. Dieses Kugelgelenk ermöglicht es, beide Gehäusehälften in bezug auf die Teilkugelfläche so miteinander zu verrasten, dass entweder ein spielfreies Kugelgelenk oder ein friktionsbehaftetes Kugelgelenk geschaffen wird, welches sich nach einer bestimmten Anzahl von Gelenkbewegungen selbsttätig passgerecht einschleift. In jedem Fall wird durch diese erfindungsgennäße Anordnung ein zu einem unerwünschten Spiel und damit zu unerwünschten Kippbewegungen neigendes Kugelgelenk ebenso unterbunden wie ein mit zu großen Friktionskräften behaftetes.

Und schließlich erfordert dieses Kugelgelenk nur noch zwei Teile, weil nunmehr die hohlkugelförmige Lagerfläche in die beiden Gehäusehälften integriert ist. Dadurch wird nicht nur eine einfache Fertigung, sondern auch eine ebenso einfache wie rasche sowie sichere Montage gewährleistet.

Bei der Montage greifen vorteilhaft die Gehäuse-Außenteile der beiden Gehäusehälften mit ihren zylindrischen Rastelementen übereinander, von denen das dem Kugelkopf zugekehrte, zylindrische Rastelement der einen Gehäusehälfte an ihrer Zylinder-Außenfläche alternierend mit Rastnasen und Rastrillen und die Zylinder-Innenfläche des darübergreifenden zylindrischen Rastelementes der anderen Gehäusehälfte mit entsprechenden Rastrillen und Rastnasen versehen ist, die widerhakenartig ineinander greifen. Da die beiden Rastelemente mit ihren zylindrischen Außenflächen passgerecht an dem metallischen Ringelement anliegen und von diesem formschlüssig umgriffen sind, ist ein Lösen der Rastverbindung zerstörungsfrei nicht mehr möglich.

Es versteht sich, dass die Zylinderflächen der Rastelemente alternativ auch in Rastzungen aufgelöst werden können, wie dies die Figuren 1 und 3 des älteren Vorschlages DE 100 23 602 A1 zeigen.

Und schließlich bewirkt jede Federvorspannung der Gehäuse-Innenteile zu ihren Lagerflächen eine Erhöhung der Verriegelungshäfte der Rastelemente, die dadurch druckerhöhend gegen das metallische Ringelement gepresst werden.

Um das Kugelgelenk von eindringenden Verschmutzungen und damit einhergehenden unerwünschten Friktionen freizuhalten, sind beide Gehäusehälften an ihren Enden mit je einem Ringwulst versehen und über eine diesen übergreifende entropieelastische Ringmanschette gegen die Hülse oder den Zapfen abgedichtet.

Die Ringmanschetten können entweder mittelbar oder unmittelbar unter elastischer Vorspannung an den Gehäusehälften befestigt oder stoffschlüssig mit diesen verbunden werden. Als stoffschlüssige Verbindung kann dabei beispielsweise ein Zweikomponentenspritzverfahren zum Einsatz kommen. Ebenso liegt eine einteilige Ausführung von Ringmanschette und Gehäusehälfte innerhalb des Erfindungsgedankens.

Während die Hülse oder der Zapfen aus einer bewährten Metall-Legierung besteht, sind die Gehäusehälften aus einem verschleiß- sowie warmfesten Kunststoff, wie beispielsweise Polyetherimid, Polyamid, Polyoxymethylen, Polyetheretherketon, hergestellt.

Besonders vorteilhaft lässt sich das vorbeschriebene Kugelgelenk an einer Pendelstütze, an einer Spurstange oder an einem Lenker eines Kraftwagens verwenden.

Mehrere Ausführungsbeispiele der Erfindung sind in den Zeichnungen dargestellt. Dabei zeigen:
- Fig. 1:: die Ansicht einer ersten Ausführungsform eines Kugelgelenks in Verbindung mit einer Hülse,
- Fig. 2:: die Schnittansicht entlang der Linie II-II von Fig. 1,
- Fig. 3:: die Ausschnittvergrößerung III von Fig. 2,
- Fig. 4:: die Ansicht einer zweiten Ausführungsform eines Kugelgelenks in Verbindung mit einer Hülse, die an beiden Enden über je eine entropieelastische Ringmanschette gegenüber den beiden Gehäusehälften abgedichtet ist,
- Fig. 5:: die Schnittansicht entlang der Linie V-V von Fig. 4,
- Fig. 6:: die Ausschnittvergrößerung VI von Fig. 5,
- Fig. 7:: die Ansicht einer dritten Ausführungsform eines Kugelgelenks in Verbindung mit einem Zapfen,
- Fig. 8:: die Schnittansicht entlang der Linie VIII-VIII von Fig. 7,
- Fig. 9:: die Ausschnittvergrößerung IX von Fig. 8 und
- Fig. 10:: die perspektivische Explosionsansicht der beiden Gehäusehälften mit dem Ringelement ohne Hülse und Zapfen.
In sämtlichen Figuren sind in ihrer Funktion übereinstimmende Teile mit gleichen Bezugsziffern bezeichnet.

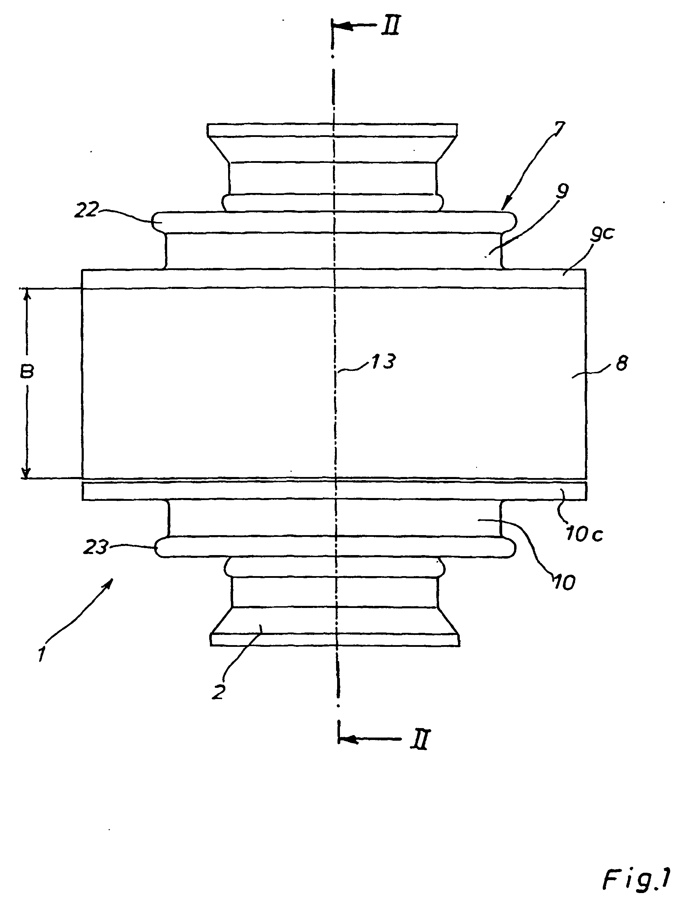

In der ersten Ausführungsform gemäß den Figuren 1 bis 3 besteht das Kugelgelenk 1 aus einer Hülse 2 mit einer Teilkugelfläche 4 und einer diese Teilkugelfläche 4 formschlüssig umgreifenden Lagerschale 5 mit hohlkugelförmigen Lagerflächen 6, die in einem gemeinsamen Gehäuse 7 angeordnet sind. Das Gehäuse 7 wird von den beiden Gehäusehälften 9, 10 gebildet, die an ihren Außenflächen 11,12 von einem metallischen Ring 8 formschlüssig umgriffen sind. Dieser Ring 8 gehört zu einem ersten, nicht dargestellten Bauteil, welches über das Kugelgelenk 1 mit einem zweiten, mit der Hülse 2 zu verbindenden, gleichfalls nicht dargestellten Bauteil gelenkig gekuppelt ist.

Die hohlkugelformige Lagerfläche 6 für die Teilkugelfläche 4 ist in den Gehäuse-Innenteilen 9a, 10a beider Gehäusehälften 9,10 integriert.

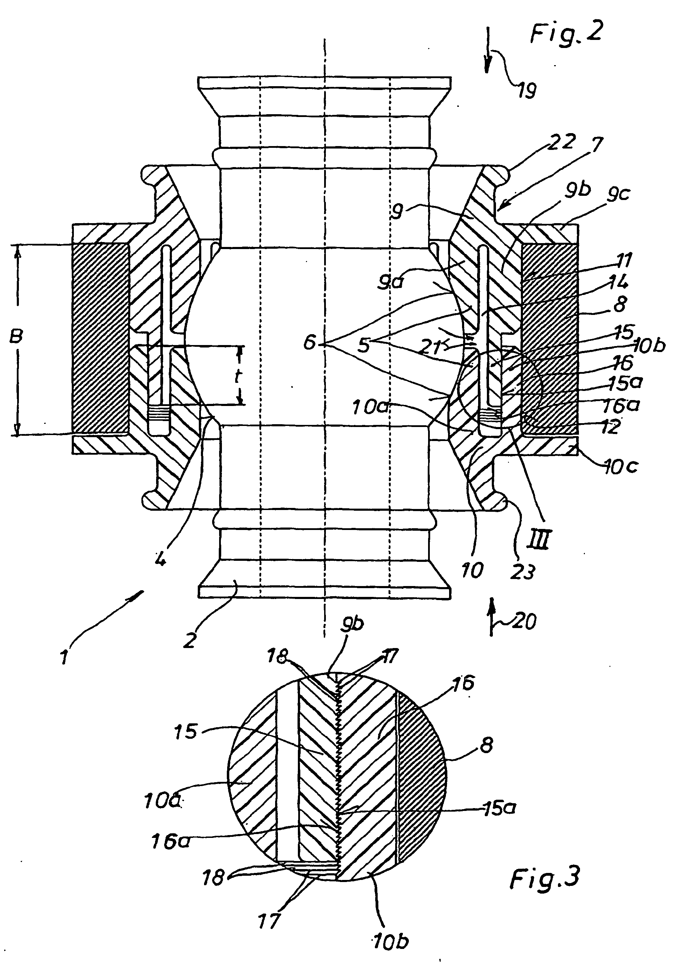

Wie aus Fig. 2 in Verbindung mit Fig. 3 hervorgeht, ist zwischen diesen die Lagerflächen 6 beinhaltenden Gehäuse-Innenteile 9a, 10a auf den die Anlageflächen 11, 12 für das Ringelement 8 aufweisenden Gehäuse-Außenteilen 9b, 10b beider Gehäusehälften 9, 10 ein etwa parallel zur Symmetrielängsachse 13 der Hülse 2 verlaufender Spalt 14 vorgesehen. An beiden Gehäuse-Außenteilen 9b, 10b sind zylindrische Rastelemente 15, 16 angeordnet, die sich gegenseitig übergreifen. Davon ist das dem Kugelkopf 4 zugekehrte zylindrische Rastelement 15 der Gehäusehälfte 9 an ihrer Zylinder-Außenfläche 15a alternierend mit Rastnasen 17 und Rastrillen 18 versehen, während die Zylinder-Innenfläche 16a des Rastelementes 16 des zweiten Gehäuseteiles 10 mit entsprechenden Rastrillen 18 und Rastnasen 17 versehen ist, die widezhakenartig ineinander greifen, wie anschaulich aus Fig. 3 ersichtlich ist.

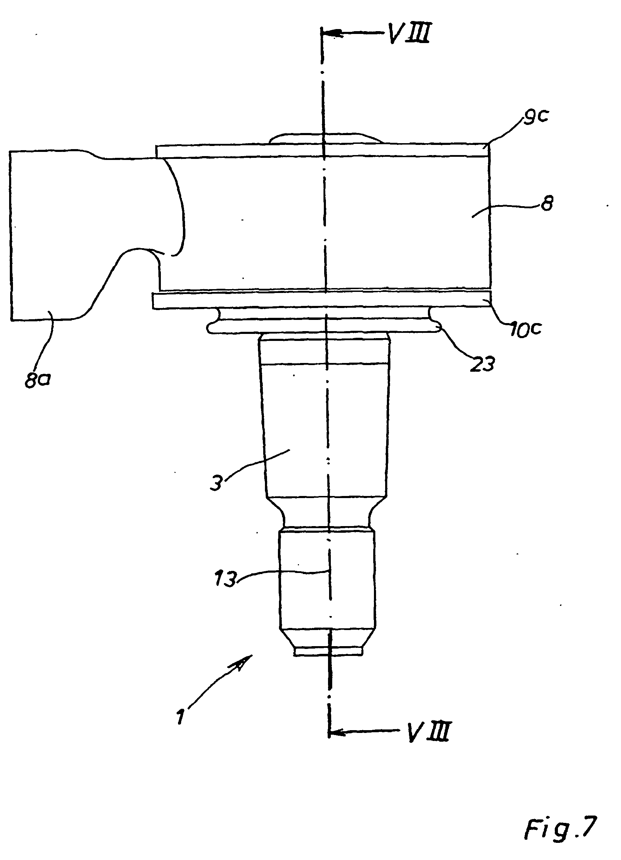

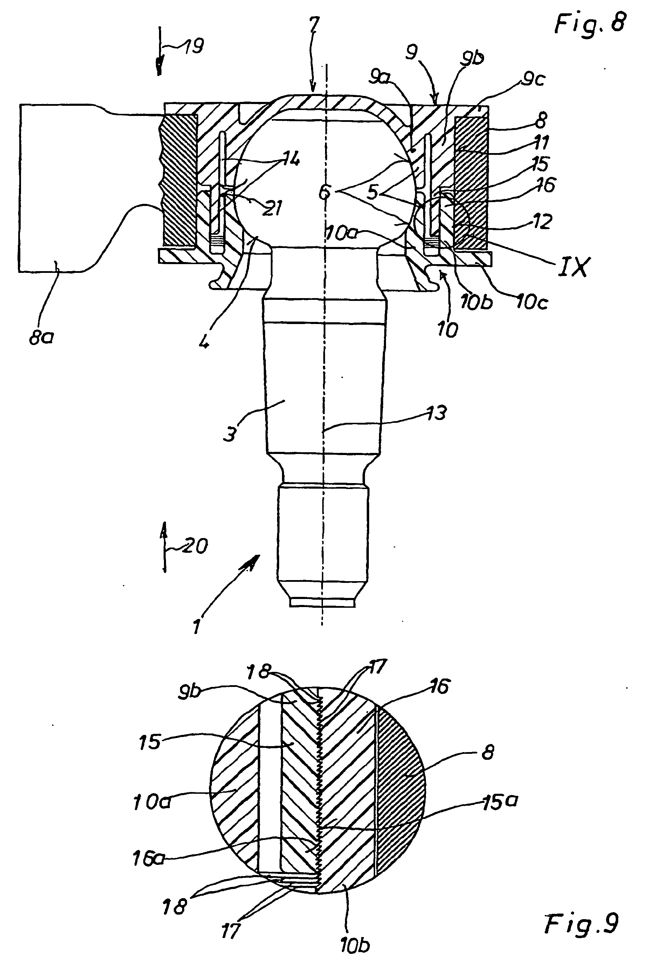

Wie aus Fig. 2 entnommen werden kann, weist jede Gehäusehälfte 9, 10 je einen Ringflansch 9c, 10c auf, der mit einer Seitenfläche an dem Ringelement 8 anliegt, dessen Breite B die Rasttiefe t der beiden zylindrischen Rastelemente 15, 16 bestimmt. Diese Rasttiefe t wird in Verbindung mit der Breite B des Ringelementes 8 so bemessen, dass in verrasteter Montageposition die Gehäuse-Innenteile 9a, 10a mit ihren Lagerflächen 6 unter einer gewissen Federvorspannung an der Teilkugelfläche 4 der Hülse 2 oder des Zapfens 3 (s. Figuren 7 bis 9) anliegen. Die Größe dieser Federvorspannung ist über die Rasttiefe t der zylindrischen Rastelemente 15, 16 steuerbar. Beim Aufeinanderschieben der beiden Gehäuseteile 9, 10 in Richtung der Pfeile 19, 20 federn die Gehäuse-Innenteile 9a, 10a nach Kontakt mit der Teilkugelfläche 4 in Richtung der Pfeile 21 nach außen, bis die gewünschte Rasttiefe t mit der gewünschten Federvorspannung erreicht ist

Das Erreichen der Rasttiefe t kann sowohl weg- als auch kraftgesteuert werden, z.B. mit der Kraft, die erforderlich ist, um die Gehäuseteile 9, 10 in Richtung der Pfeile 19, 20 aufeinanderzu zu verrasten.

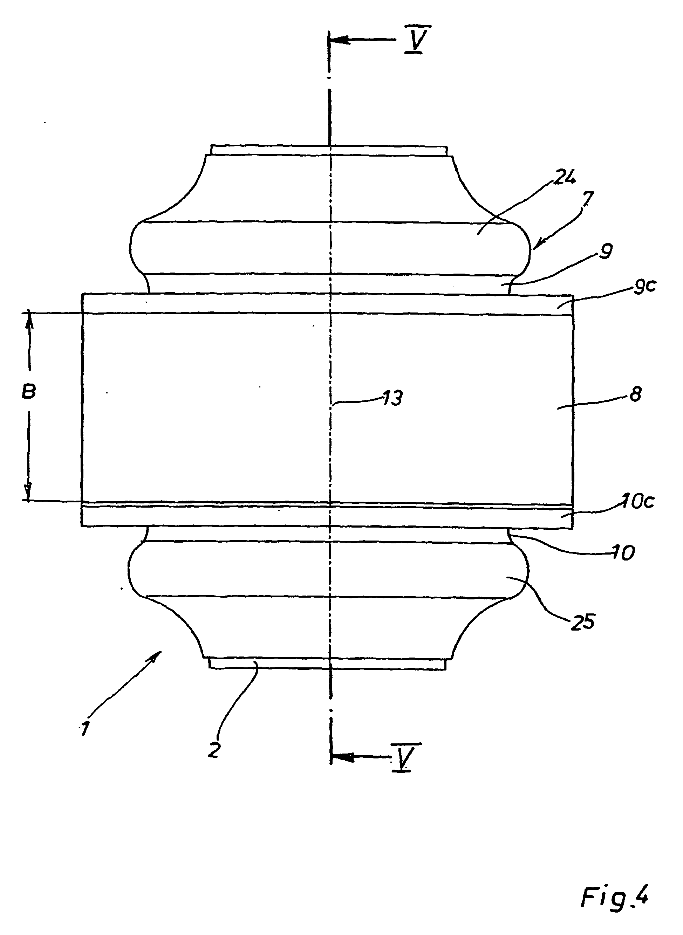

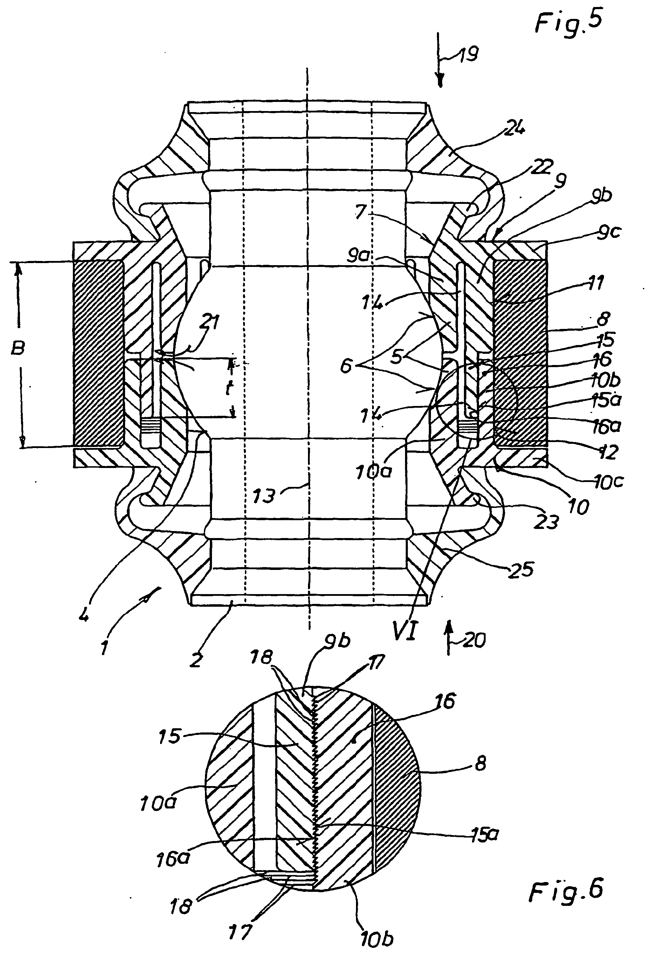

Die zweite Ausführungsform der Figuren 4 bis 6 unterscheidet sich von der ersten Ausführungsform der Figuren 1 bis 3 lediglich dadurch, dass die beiden Gehäusehälften 9,10 an ihren Enden mit je einem Ringwulst 22, 23 versehen sind und über je eine diese übergreifende, entropieelastische Ringmanschette 24, 25 gegen die Hülse 2 abgedichtet sind. Dadurch wird das Kugelgelenk 1 gegen eindringenden Staub und Feuchtigkeit gesichert.

Beide Gehäusehälften 9, 10 sind vorteilhaft aus einem verschleiß- sowie warmfesten Kunststoff, wie Polyetherimid, Polyamid, Polyoxymethylen, Polyetheretherketon, im Spritzgießverfahren hergestellt.
In den Figuren 7 bis 9 ist eine dritte Ausführungsform eines Kugelgelenkes 1 dargestellt, welche sich von den beiden vorhergeschriebenen Ausführungsformen dadurch unterscheidet, dass das Ringelement 8 zu einem Bauteil 8a gehört, welches über das Kugelgelenk 1 mit einem zweiten, mit dem Zapfen 3 zu verbindenden, nicht dargestellten Bauteil gekuppelt ist. Der Zapfen 3 ist gleichfalls mit der Teilkugelfläche 4 versehen, die von den entsprechend gestalteten hohlkugelförmigen Lagerflächen 6 der in die Gehäuse-Innenteile 9a, 10a integrierten Lager 5 umgriffen ist. Auch ansonsten sind in ihrer Funktion übereinstimmende Teile der vorbeschriebenen Ausführungsformen mit gleichen Bezugsziffern bezeichnet.

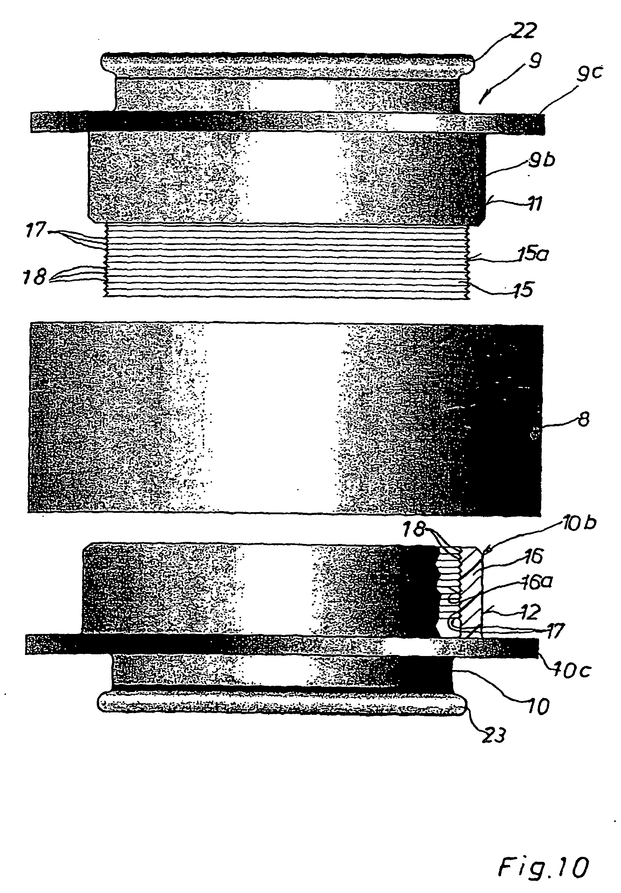

Fig. 10 zeigt die Explosionsansicht der Gehäusehälfte 9 und der Gehäusehälfte 10 mit ihren Gehäuse-Außenteilen 9b, 10b sowie den Ringflanschen 9c, 10c. Gut zu erkennen sind die zylindrischen Rastelemente 15, 16 mit ihren widerhakenartigen Rastnasen 17 und den jeweils dazwischen befindlichen Rastrillen 18. Die Ringwulste 22, 23 entsprechen den vorherbeschriebenen Ausführungsformen.

### Bezugszeichenliste

- Kugelgelenk: 1
- Hülse: 2
- Zapfen: 3
- Teilkugelffäche: 4
- Lagerschale: 5
- Lagerfläche: 6
- Gehäuse: 7
- Ringelement: 8
- Bauteil: 8a
- Gehäusehälften: 9,10
- Gehäuse-Innenteile: 9a, 10a
- Gehäuse-Außenteile: 9b, 10b
- Ringflansche der Gehäusehälften 9,10: 9c, 10c
- Außenflächen der Gehäusehälften 9, 10: 11, 12
- Symmetrielängsachse: 13
- Spalt: 14
- Rastelemente: 15, 16
- Zylinder-Außenfläche des Rastelementes 15: 15a
- Zylinder-Innenfläche des Rastelementes 16: 16a
- Rastnasen: 17
- Rastrillen: 18
- Pfeile: 19, 20, 21
- Ringwulste: 22, 23
- Ringmanschetten: 24, 25
- Breite des Ringelementes 8: B
- Rasttiefe der zylindrischen Rastelemente 15,16: t

## Patentansprüche

1. Kugelgelenk, bestehend aus einer Hülse oder einem Zapfen mit einer Teilkugelfläche und einer diese Teilkugelfläche formschlüssig umfassenden Lagerschale mit hohlkugelförmiger Lagerfläche, die in einem zweiteiligen Gehäuse angeordnet ist, dessen Gehäusehälften Rastelemente gegenseitig ineinandergreifende Rastnasen und Rastrillen aufweisen, die in ihrer Montageendlage beide Gehäusehälften in Richtung der Längsachse der Hülse bzw. des Zapfens relativ unbeweglich miteinander verrasten, wobei die Lagerfläche (6) für die Teilkugelfläche (4) der Hülse (2) oder des Zapfens (3) in die Innenflächen beider Gehäusehälften (9,10) integriert ist, **dadurch gekennzeichnet, dass** die Rastnasen (17) und Rastrillen (18) an einer Gehausehälfte alternierend angeordnet sind und in die ebenfalls alternierend angeordneten Rastriellen (18) und Rastrasen (17) der anderen Gehäusehalfte eingreifen.

2. Kugelgelenk nach Anspruch 1, **dadurch gekennzeichnet, dass** die Gehäusehälften (9,10) an ihrer Außenfläche (11,12) von einem metallischen Ringelement (8) formschlüssig umgriffen sind.

3. Kugelgelenk nach Anspruch 1, **dadurch gekennzeichnet, dass** das Ringelement (8) zu einem ersten Bauteil (8a) gehört, welches über das Kugelgelenk (1) mit einem zweiten, mit der Hülse (2) oder dem Zapfen (3) zu verbindenden Bauteil gekuppelt ist.

4. Kugelgelenk nach Anspruch 1 oder 2, **dadurch gekennzeichnet, dass** zwischen den die Lagerflächen (6) beinhaltenden Gehäuse-Innenteilen (9a, 10a) und den die Anlagefläche (11, 12) für das Ringelement (8) aufweisenden Gehäuse-Außenteilen (9b, 10b) beider Gehäusehälften (9, 10) ein etwa parallel zur Symmetrielängsachse (13) der Hülse (2) oder des Zapfens (3) verlaufender Spalt (14) vorgesehen ist.

5. Kugelgelenk nach einem der Ansprüche 1 bis 3, **dadurch gekennzeichnet, dass** in verrasteter Montageposition die Gehäuse-Innenteile (9a, 10a) mit ihren Lagerflächen (6) unter einer Federvorspannung an der Teilkugelfläche (4) der Hülse (2) oder des Zapfens (3) anliegen.

6. Kugelgelenk nach Anspruch 4, **dadurch gekennzeichnet, dass** die Größe der Federvorspannung über die Rasttiefe (t) der Rastelemente (15,16) weggesteuert oder nach der Zusammenpresskraft beider Gehäusehälften (9,10) kraftgesteuert ist.

7. Kugelgelenk nach einem der Ansprüche 1 bis 5, **dadurch gekennzeichnet, dass** die Gehäuse-AuBenteile (9b, 1 0b) der beiden Gehäusehälften (9, 10) mit zylindrischen Rastelementen (15,16) übereinander greifen, von denen das dem Kugelkopf (4) zugekehrte, zylindrische Rastelement (15) der einen Gehäusehälfte (9) an ihrer Teilzylinder-Außenfläche (15a) alternierend mit Rastnasen (17) und Rastrillen (18) und die Zylinder-Innenfläche (16a) des darübergreifenden zylindrischen Rastelementes (16) der anderen Gehäusehälfte (10) mit entsprechenden Rastrillen (18) und Rastnasen (17) versehen ist, die widerhakenartig ineinander greifen.

8. Kugelgelenk nach einem der Ansprüche 1 bis 6, **dadurch gekennzeichnet, dass** beide Gehäusehälften (9,10) an ihren Enden mit je einem Ringwulst (22, 23) versehen und über eine diesen (22, 23) übergreifende entropieelastische Ringmanschette (24, 25) gegen die Hülse (2) oder den Zapfen (3) abgedichtet sind.

9. Kugelgelenk nach einem der Ansprüche 1 bis 7, **dadurch gekennzeichnet, dass** die Gehäusehälften (9, 10) aus einem verschleiß- sowie warmfesten Kunststoff, wie Polyetherimid, Polyamid, Polyoxymethylen, Polyetheretherketon, hergestellt sind.

10. Kugelgelenk nach einem der Ansprüche 1 bis 8, zur Verwendung an einer Pendelstütze, an einer Spurstange oder am Lenker eines Kraftwagens.

11. Kugelgelenk nach einem der Ansprüche 8 bis 10, **dadurch gekennzeichnet, dass** die Ringmanschetten (24, 25) stoffschlüssig mit den Gehäusehälften (9, 10) verbunden sind.

## Claims

1. Ball joint, consisting of a sleeve or a pin having a part-spherical surface, and a bearing shell with a hollow-spherical bearing surface which form-fittingly surrounds said part-spherical surface and is arranged in a two-part housing, the halves of which have locking elements with mutually inter-engaging locking ribs and locking grooves which lock the two housing halves immovably relative to one another in the direction of the longitudinal axis of the sleeve or pin in their final assembled position, the bearing surface (6) for the part-spherical surface (4) of the sleeve (2) or pin (3) being integrated in the inner faces of the two housing halves (9, 10), **characterised in that** the locking ribs (17) and locking grooves (18) of the one housing half are arranged alternately and engage in the likewise alternately arranged locking grooves (18) and locking ribs (17) of the other housing half.

2. Ball joint according to claim 1, **characterised in that** the outer faces (11, 12) of the housing halves (9, 10) are surrounded form-fittingly by an annular metal element (8).

3. Ball joint according to claim 1, **characterised in that** the annular element (8) forms part of a first component (8a) which is coupled via the ball joint (1) to a second component which is to be connected to the sleeve (2) or the pin (3).

4. Ball joint according to claim 1 or 2, **characterised in that** a gap (14) disposed approximately parallel to the longitudinal axis of symmetry (13) of the sleeve (2) or the pin (3) is provided between the inner housing portions (9a, 10a) including the bearing surfaces (6) and the outer housing portions (9b, 10b) of the two housing halves (9, 10), which outer housing portions (9b, 10b) have the locating faces (11, 12) for the annular element (8).

5. Ball joint according to any one of claims 1 to 3, **characterised in that**, in the locked, assembled position, the bearing surfaces (6) of the inner housing portions (9a, 10a) bear with a spring preload against the part-spherical surface (4) of the sleeve (2) or the pin (3).

6. Ball joint according to claim 4, **characterised in that** the magnitude of the spring preload is distance-controlled via the locking depth (t) of the locking elements (15, 16), or force-controlled according to the force with which the two housing halves (9, 10) are pressed together.

7. Ball joint according to any one of claims 1 to 5, **characterised in that** the outer housing portions (9b, 10b) of the two housing halves (9, 10) overlap one another with cylindrical locking elements (15, 16), the cylindrical locking element (15) of the first housing half (9) which faces towards the ball head (4) being provided on its part-cylindrical outer surface (15a) alternately with locking ribs (17) and locking grooves (18), and the inner cylinder face (16a) of the cylindrical locking element (16) of the other housing half (10) which overlaps said part-cylindrical outer surface (15a) being provided with corresponding locking grooves (18) and locking ribs (17), which mesh with one another in the manner of barbs.

8. Ball joint according to any one of claims 1 to 6, **characterised in that** the two housing halves (9, 10) are each provided at their ends with annular beads (22, 23) and are sealed against the sleeve (2) or the pin (3) via respective entropy-elastic annular gaiters (24, 25) fitting over said beads (22, 23).

9. Ball joint according to any one of claims 1 to 7, **characterised in that** the housing halves (9, 10) are manufactured from a wear- and heat-resistant plastics material such as polyetherimide, polyamide, polyoxymethylene, polyetheretherketone.

10. Ball joint according to any one of claims 1 to 8 for use on a rocking mount, a track rod or a suspension arm of a motor vehicle.

11. Ball joint according to any one of claims 8 to 10, **characterised in that** the annular gaiters (24, 25) are connected to the housing halves (9, 10) by a material joint.

## Revendications

1. Joint à rotule se composant d'un support ou d'un pivot avec une surface sphérique partielle et une coquille de support entourant mécaniquement cette surface sphérique partielle, présentant une surface d'appui, en forme de sphère creuse, qui est disposée sur un boîtier en deux parties dont les moitiés de boîtier comportent des éléments d'encliquetage, arêtes d'encliquetage et rainures d'encliquetage s'engrenant mutuellement, qui, dans leur position de montage finale, enclenchent de manière fixe les deux moitiés de boîtier l'une à l'autre, en direction de l'axe longitudinal du support ou du pivot, la surface d'appui (6) pour la surface sphérique partielle (4) du support (2) ou du pivot (3) étant intégrée dans les surfaces intérieures des deux moitiés de boîtier (9, 10), **caractérisé en ce que** les arêtes d'encliquetage (17) et les rainures d'encliquetage (18) sont disposées en alternance sur une moitié de boîtier et s'engrènent dans les rainures d'encliquetage (18) et les arêtes d'encliquetage (17) de l'autre moitié de boîtier également disposées en alternance.

2. Joint à rotule selon la revendication 1, **caractérisé en ce que** les moitiés de boîtier (9, 10) sont sur leur surface extérieure (11, 12) enveloppées mécaniquement par un élément circulaire (8) métallique.

3. Joint à rotule selon la revendication 1, **caractérisé en ce que** l'élément circulaire (8) fait partie d'un premier composant (8a) qui est couplé à un second composant à relier au support (2) ou au pivot (3) par le biais du joint à rotule (1).

4. Joint à rotule selon la revendication 1 ou 2, **caractérisé en ce qu'**un interstice (14) à peu près parallèle à l'axe longitudinal de symétrie (13) du support (2) ou du pivot (3) est prévu entre les parties intérieures de boîtier (9a, 10a), comprenant les surfaces d'appui (6), et les parties extérieures de boîtier (9b, 10b), comportant la surface d'appui (11, 12) pour l'élément circulaire (8), des deux moitiés de boîtier (9, 10).

5. Joint à rotule selon l'une quelconque des revendications 1 à 3, **caractérisé en ce que**, en position de montage encliquetée, les parties intérieures de boîtier (9a, 10a), sous une précontrainte de ressort, viennent en contact avec leurs surfaces d'appui (6) sur la surface sphérique partielle (4) du support (2) ou du pivot (3).

6. Joint à rotule selon la revendication 4, **caractérisé en ce que** l'importance de la précontrainte de ressort est contrôlée par la course par le biais de la profondeur d'enclenchement (t) des éléments d'encliquetage (15, 16) ou contrôlée par la force selon la force de resserrement des deux moitiés de boîtier (9, 10).

7. Joint à rotule selon l'une quelconque des revendications 1 à 5, **caractérisé en ce que** les parties extérieures de boîtier (9b, 10b) des deux moitiés de boîtier (9, 10) se chevauchent avec des éléments d'encliquetage (15, 16) cylindriques, l'élément d'encliquetage (15) cylindrique, opposé à la tête sphérique (4), de l'une des moitiés de boîtier (9) étant doté en alternance d'arêtes d'encliquetage (17) et de rainures d'encliquetage (18) sur sa surface extérieure cylindrique partielle (15a), et la surface intérieure (16a) cylindrique de l'élément d'encliquetage (16) cylindrique de l'autre moitié de boîtier (10) étant dotée des rainures d'encliquetage (18) et des arêtes d'encliquetage (17) correspondantes qui s'engrènent à la manière de crochets.

8. Joint à rotule selon l'une quelconque des revendications 1 à 6, **caractérisé en ce que** les deux moitiés de boîtier (9, 10) sont équipées à chacune de leurs extrémités d'un bourrelet circulaire (22, 23) et étanchéifiées vis-à-vis du support (2) ou du pivot (3) par le biais d'un joint circulaire (24,25) à élasticité entropique, recouvrant ce bourrelet (22, 23).

9. Joint à rotule selon l'une quelconque des revendications 1 à 7, **caractérisé en ce que** les moitiés de boîtier (9, 10) sont fabriquées en une matière plastique résistant à l'usure et à la chaleur, comme le polyéthérimide, le polyamide, le polyoxyméthylène, le polyétheréthercétone.

10. Joint à rotule selon l'une quelconque des revendications 1 à 8, en vue d'une utilisation sur un support pendulaire, sur une barre d'accouplement ou sur un bras oscillant d'un véhicule.

11. Joint à rotule selon l'une quelconque des revendications 8 à 10, **caractérisé en ce que** les joints circulaires (24, 25) sont reliés aux moitiés de boîtier (9, 10) par liaison de matériau.
